(19) Europäisches Patentamt

European Patent Office

Office européen des brevets

(11) **EP 1 187 671 B1**

(12) **EUROPÄISCHE PATENTSCHRIFT**

(45) Veröffentlichungstag und Bekanntmachung des Hinweises auf die Patenterteilung:
**26.03.2003 Patentblatt 2003/13**

(21) Anmeldenummer: 00943820.1

(22) Anmeldetag: **16.06.2000**

(51) Int Cl.⁷: **B01F 5/02**, B01F 13/00, B01F 15/00

(86) Internationale Anmeldenummer:
**PCT/EP00/05546**

(87) Internationale Veröffentlichungsnummer:
**WO 00/078438 (28.12.2000 Gazette 2000/52)**

(54) **STATISCHER MIKROVERMISCHER**

STATIC MICROMIXER

MICROMELANGEUR STATIQUE

(84) Benannte Vertragsstaaten:
**AT BE CH CY DE DK ES FI FR GB GR IE IT LI LU MC NL PT SE**

(30) Priorität: **19.06.1999 DE 19928123**

(43) Veröffentlichungstag der Anmeldung:
**20.03.2002 Patentblatt 2002/12**

(73) Patentinhaber:
• **Forschungszentrum Karlsruhe GmbH
76133 Karlsruhe (DE)**
• **BAYER AG
51368 Leverkusen (DE)**

(72) Erfinder:
• **SCHUBERT, Klaus
D-76227 Karlsruhe (DE)**
• **FICHTNER, Maximilian
D-68723 Oftersheim (DE)**
• **WIESSMEIER, Georg
D-51061 Köln (DE)**
• **EHLERS, Stefan
D-50676 Köln (DE)**
• **ELGETI, Klaus
D-51467 Bergisch-Gladbach (DE)**

(74) Vertreter: **Rückert, Friedrich, Dr.
Forschungszentrum Karlsruhe GmbH
Patente und Lizenzen
Weberstrasse 5
76133 Karlsruhe (DE)**

(56) Entgegenhaltungen:
EP-A- 0 685 533          WO-A-97/17130
DE-A- 19 626 246

**Beschreibung**

Die Erfindung betrifft einen statischen Mikrovermischer mit einer Mischkammer und vorgeschaltetem Führungsbauteil für die getrennte Zuführung von zu mischenden oder zu dispergierenden Fluiden zu der Mischkammer gemäß Oberbegriff von Anspruch 1.

Aus der DE 44 16 343 C2 ist ein Mikro-Vermischer mit wenigstens einer Mischkammer und einem vorgeschalteten Führungsbauteil für die getrennte Zufuhr von zu mischenden Fluiden zu einer Mischkammer bekannt, wobei das Führungsbauteil mit Ausdehnungen im Millimeterbereich aus mehreren, übereinander geschichteten Folien mit einer jeweiligen Dicke von ca. 100 µm zusammengesetzt ist, in die die Kanäle als Mikrostrukturen eingearbeitet sind. Die gerade verlaufenden, im Querschnitt gleichbleibenden Zuführungskanäle verlaufen schräg zur Mikrovermischer-Längsachse, wobei die Kanäle benachbarter Folien sich berührungslos kreuzen und in die gemeinsame Mischkammer ausmünden. Die Kanäle haben eine Breite kleiner 250 µm bei einer Höhe von ca. 70 µm und einer Stegstärke zwischen zwei Kanälen von ca. 15 µm. Die einzelnen Folien können beispielsweise durch Diffusionsschweißen zu einem homogenen vakuumdichten und druckfesten Mikrostrukturkörper verbunden werden, wobei als Abschluß auf die jeweils erste und letzte Folie eine Deckplatte aufzubringen ist.

Ein ähnlicher Mikro-Vermischer, bei dem bei sonst gleichem Aufbau und Funktionsprinzip die Zuführungskanäle von für zwei zu mischenden oder zu dispergierenden Fluiden bogenförmig verlaufend parallel zueinander in die Mischkammer ausmünden, wird in DE 195 40 292 C1 beschrieben. Durch diese Anordnung verspricht man sich eine über den gesamten Ausströmquerschnitt gleichmäßig hohe und schnelle Vermischung in der Mischkammer. Die Führungskanäle haben einen gleichbleibenden Querschnitt mit Breiten kleiner 250 µm, die Folien, in denen die Kanalstrukturen eingearbeitet werden, eine Dicke von ca. 100 µm.

Eine weitere Möglichkeit, den Mischprozeß zu optimieren, beschreibt WO97/17130. Durch eine Zusammenlegung von Einzelkanälen zu einem schlitzförmigen Kanal pro Folie erhält der Mikrovermischer durch den Wegfall der Stege zwischen den Einzelkanälen ein günstigeres Verhältnis von Volumenstrom zu Kanalwandfläche und damit eine Reduktion der Reibungsdruckverluste im Führungsbauteil.

Die Aufgabe der Erfindung besteht ausgehend von dem zuletzt beschriebenen Stand der Technik darin, bei einem statischen Vermischer der gattungsgemäßen Bauart das Führungsbauteil für die Zuführung der zu vermischenden Fluide zur Mischkammer so zu gestalten, daß eine weitere Verminderung der Druckverluste der Fluide im Führungsbauteil zwischen Eintritts- und gemeinsamer Austrittsseite erreicht wird. Dabei soll eine mindestens gleichbleibende oder möglichst verbesserte Mischgüte (Effektivität des Mischvorganges) er

zielt werden.

Diese Aufgabe wird durch die kennzeichnenden Merkmale in Anspruch 1 gelöst; die hierauf bezogenen Unteransprüche beinhalten vorteilhafte Ausführungsformen dieser Lösung.

Das Führungsbauteil des Mikrovermischers ist so gestaltet, daß sich die hierin angeordneten zwischen der Fluideintrittsseite und der Mischkammer schlitzförmig verlaufenden Kanäle in Richtung der Fluidaustrittsseite in ihrem Querschnitt verjüngen. Die einzelnen Zuführungskanäle verlaufen dabei von den mindestens zwei Fluidzuführungskammern schräg zur Mikrovermischer-Längsachse, wobei sich benachbarte Kanäle, welche Fluide aus unterschiedlichen Zuführungskammern enthalten, berührungslos kreuzen und über eine gemeinsame Austrittsquerschnittsfläche in die Mischkammer ausmünden. Die an die Mischkammer angrenzenden Mündungen der schlitzförmigen Kanäle liegen fluchtend übereinander. Durch die Einführung einer zweiten Mischstufe in der Mischkammer in Gestalt eines die Strömung unterteilenden Gebildes (z. B. eines Gitters) wird die Turbulenz in der Mischkammer erhöht und damit die Mischereffektivität gesteigert.

Durch die Vergrößerung der Kanalquerschnitte in Richtung der Eintrittseite reduziert sich die Strömungsgeschwindigkeit eines hierin strömenden Fluids bei gleichbleibendem Volumenstrom mit der Erweiterung des Kanals. Durch die größeren Kanalquerschnitte und die geringere Strömungsgeschwindigkeiten reduzieren sich die Reibungsdruckverluste in den Fluiden zwischen Eintritts- und Austrittsseite des Führungsbauteils. Darüber hinaus reduziert sich durch eine lokale Erweiterung der Kanäle auch die Gefahr des Zusetzens durch Verunreinigungen.

Ein Ausführungsbeispiel des erfindungsgemäßen Mikrovermischers sowie ein Verfahren zur Herstellung desselben werden im folgenden anhand der Zeichnungen erläutert:

Fig. 1 zeigt das Führungsbauteil des Mikrovermischers perspektivisch und in starker Vergrößerung als Prinzipskizze.

Fig. 2 zeigt das Führungsbauteil schematisch in Draufsicht jeweils von der Kanaleintritts- (Fig. 2a) sowie von der Kanalaustrittsseite (Fig. 2b).

Fig. 3 zeigt drei Beispiele für drei verschiedene Ausführungsformen einer Kanalaustrittsseite, welche mit in Strömungsrichtung ausgerichteten Führungsstegen versehen sind.

Fig. 4 zeigt den Mikrovermischer mit Führungsbauteil, der Mischkammer und den Zu- und Ableitungskomponenten. Hinter der Kanalaustrittseite ist im Fluidstrom zusätzlich ein Gitter angeordnet.

Fig. 5 veranschaulicht ein spezielles Herstellverfah

ren für das Führungsbauteil.

Fig. 6 zeigt in einem Diagramm die Produktselektivität X(Q) [-] des Produktes Q der zur Bestimmung der Mischgüte des Mikrovermischers verwendeten Testreaktion im Vergleich zu einer vorbekannten Mikrovermischerausführung, aufgetragen über der mittleren Gesamt-Energiedichte E [J/m$^3$].

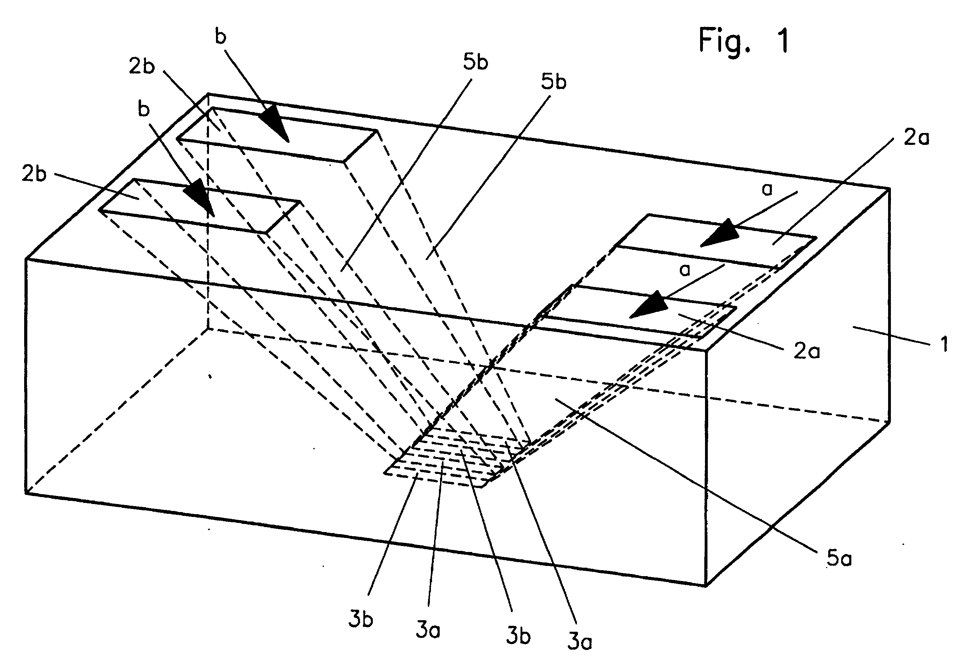

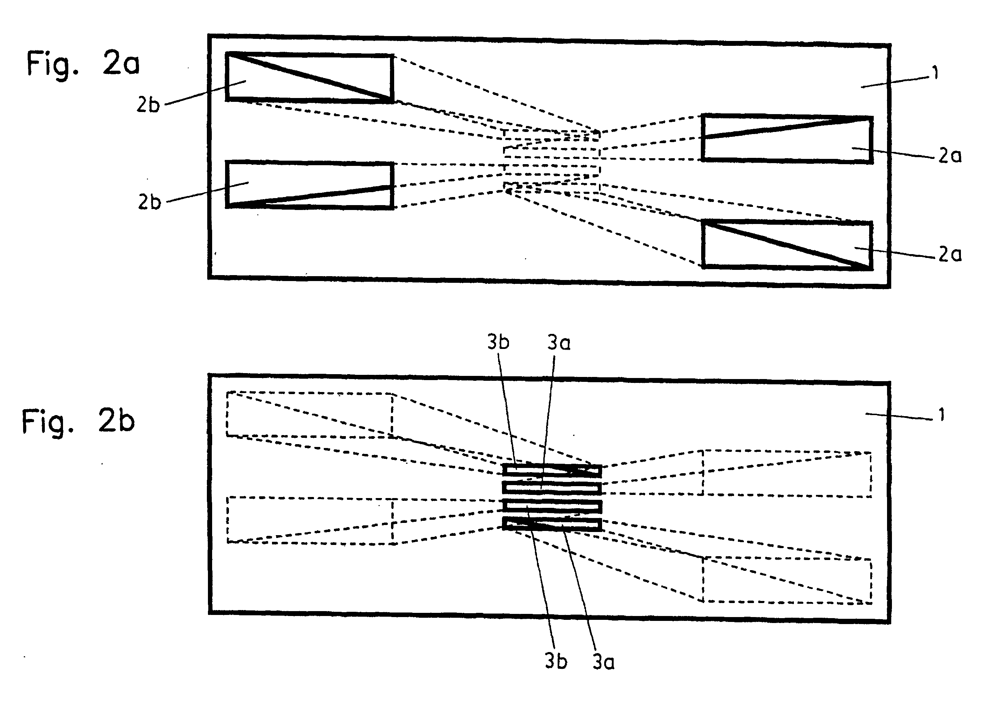

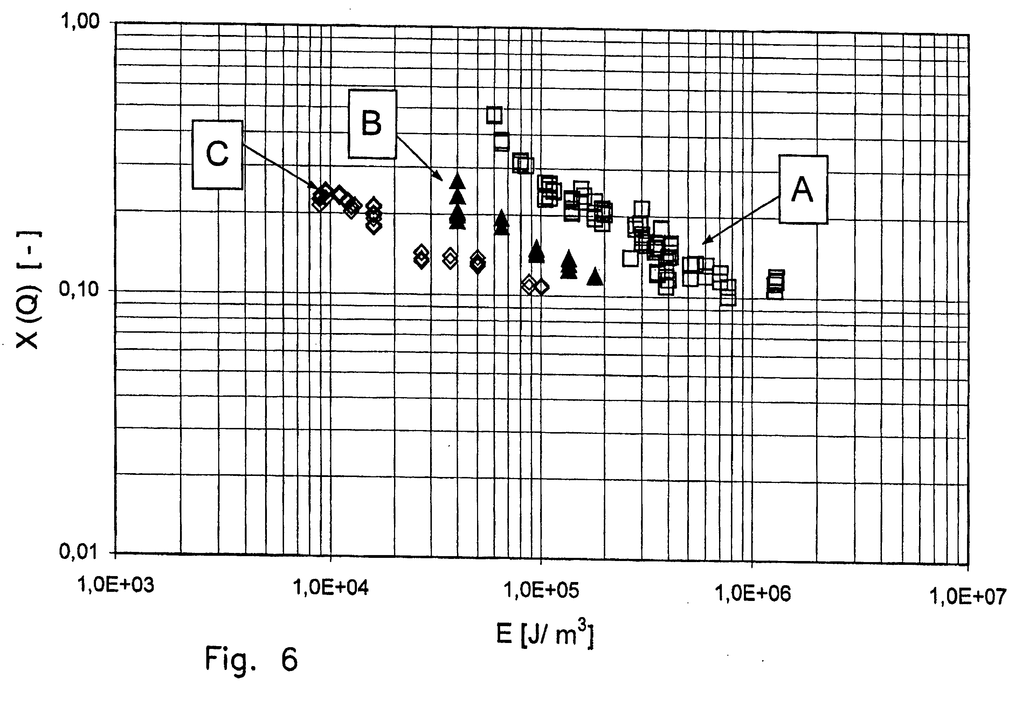

Gemäß Fig. 1 bis 4 besteht das Führungsbauteil 1 aus Metall, Kunststoff oder Keramik. Die Strömungsrichtung der einzelnen Fluidströme a und b verlaufen von den Kanaleintrittsseiten 2a und 2b zur Kanalaustrittseite 3a und 3b in eine gemeinsame Mischkammer 4 und bilden den gemeinsamen Fluidstrom c. Die Kanäle 5a und 5b weisen an der Austrittsseite der Ausführungsform, welche für die Ermittlung der Daten für die in Fig. 6 dargestellte Meßkurve herangezogen wurde, eine Höhe von ca. 150 µm bei einer Schlitzbreite von 9 mm, auf der Eintrittsseite eine Höhe von ca. 1,5 mm bei einer Schlitzbreite von ca. 11mm auf. Die Wanddicken zwischen zwei Kanälen auf der Austrittsseite betragen dabei ca. 150 µm.

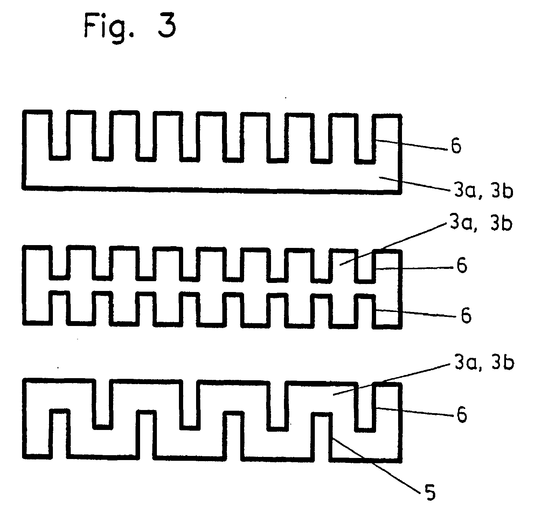

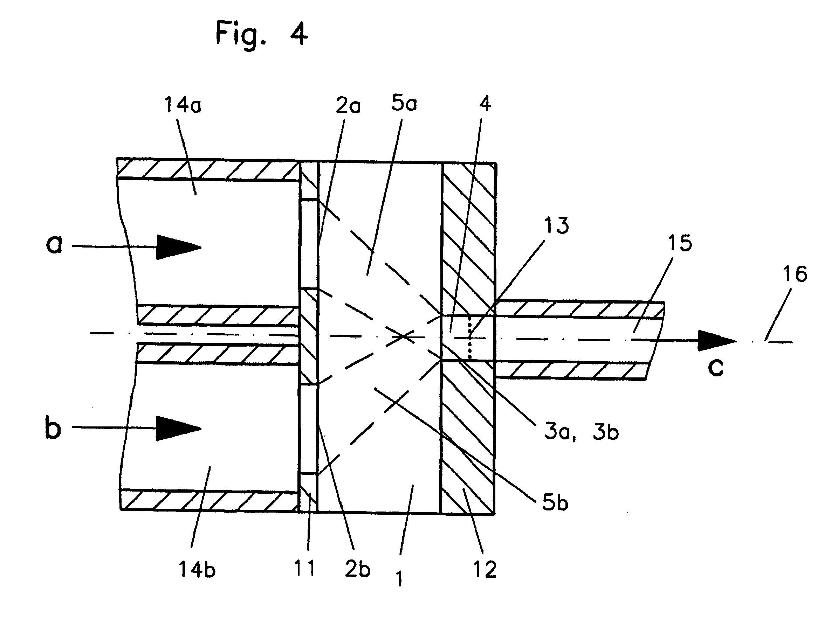

Für eine gezielte Führung der Strömung der Fluide a und b an den Kanalaustrittsseiten 3a und 3b können die Kanäle mit in Strömungsrichtung der Fluide (Pfeile a und b) ausgerichteten Stegen 6 versehen werden. Fig. 3 zeigt drei verschiedene Anordnungen für diese Führungsstege an der Kanalaustrittsseite. Ferner kann, wie in Fig. 4 an der Gesamtanordnung eines Mikrovermichers dargestellt, in der Mischkammer 4 eine die Strömung unterteilendes Gebilde z. B. in Gestalt eines Gitters 13 angeordnet sein.

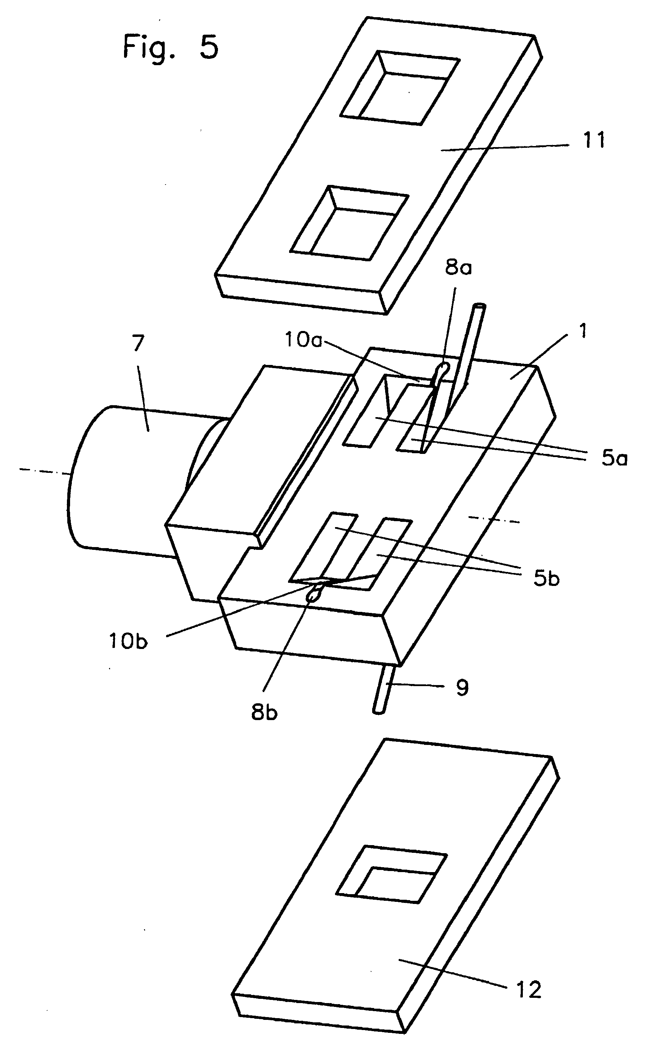

Besteht das Führungsbauteil aus Metall oder einer elektrisch leitfähigen Keramik, kann dieses, wie in Fig. 5 dargestellt, mittels Drahterosion mit nur einem Schnitt pro Fluidstrom a bzw. b hergestellt werden. Für dieses Herstellverfahren ist eine stromleitende und frei schwenkbare Einspannung 7 für das Führungsbauteil 1 vorzusehen. Hierzu ist zunächst für jede Kanalgruppe 5a bzw. 5b eines Fluidstromes eine Bohrung 8a bzw. 8b als Startpunkt für das Drahterodierverfahren vorzusehen, in die der Draht 9 eingefädelt wird. Für den späteren Einsatz müssen die Bohrungen 8a und 8b sowie die Hilfsschnitte 10a bzw. 10b sowohl eintritts- als auch austrittsseitig mit je einer Platte 11 bzw. 12 abgedeckt werden, wobei die Bereiche der Kanaleintrittsseiten 2a und 2b und der Kanalaustrittsseite 3a bzw. 3b in diesen ausgespart sind (siehe Fig. 4).

Zur vergleichenden Beurteilung der Vermischungseffektivität verschiedener Mikrovermischertypen wurde in einem Testverfahren eine Azokupplungsreaktion von 1- und 2- Naphtol (Stoff x bzw. x') mit 4-Sulfonsäurebenzoldiazoniumsalz (Stoff y) eingesetzt. Bei der Reaktion handelt es sich um eine Parallelreaktion mit dem im folgenden dargestellten Reaktionsschema

$$x + y \rightarrow R$$

$$x' + y \rightarrow Q$$

Das zweite Produkt Q kann auf einfache Weise mit Hilfe von Absorptionsspektren analysiert werden. Die Güte des Mischvorgangs wird dabei durch die Selektivität X(Q) des Produkts Q beurteilt: Kommt es zu einer sofortigen und vollständigen Vermischung aller beteiligten Stoffe x, x' und y in einer Mischkammer, stellt sich für die Selektivität X(Q) bei den gewählten Konzentrationsverhältnissen ein Wert von 0,1 ein. Je mehr von dem Produkt Q zu Ungunsten des Produkts R gebildet wird, desto schlechter ist die Vermischung.

Die Selektivität X(Q) [-] des Produkts Q aufgetragen über die mittlere Gesamt-Energiedichte E

$$E = \Delta_{p1} \cdot (V_1 / V_{ges}) + \Delta_{p2} \cdot (V_2 / V_{ges}) \qquad [J/m^3],$$

($p_i$ = Druckverlust der Passage i, $V_i$ = Volumenstrom der Passage i, $V_{ges}$ = Gesamtvolumenstrom) ist in Fig. 6 für den Mikrovermischer gemäß Anspruch 1 mit und ohne nachgeschaltetem Gitter 13 (Punkteschar B bzw. C) im Vergleich mit dem Mikrovermischer aus DE 44 16 343 C2 (Punkteschar A) aufgetragen. Ein Mikrovermischer mit hoher Effizienz weist sich einerseits durch eine möglichst geringen Druckverlust, ein Maß für den Energieaufwand bzw. der Gesamt-Energiedichte im Mischungsvorgang, andererseits durch eine geringe Selektivität X(Q) des Produktes Q aus. Deutlich erkennbar ist, daß eine bestimmte Selektivität X(Q) bzw. eine bestimmte Mischgüte des Mikrovermischers gemäß dieser Anmeldung bereits bei einer wesentlich geringeren Gesamtenergiedichte E erreicht wird als bei dem vorbekannten Mikrovermischerkonzept. Die Effektivität des Mischvorgangs läßt sich noch steigern, wenn hinter der Austrittsseite des Führungsbauteils ein Gitter 13 durchströmt wird. Diese Modifikation ist in Fig. 4 an der Anordnung eines kompletten Mikrovermischers dargestellt. Das eingesetzte Gitter 13 hat eine Maschenweite von ca. 200 µm und befindet sich in der Mischkammer 4 im Abstand von ca. 1000 µm zu den Kanalaustrittsseiten 3a, b des Führungsbauteiles 1. Ferner sind in Fig. 4 die Zuleitungen 14a und 14b, die Fluidstöme a und b sowie die Abflußleitung 15 dargestellt.

**Patentansprüche**

1. Statischer Mikrovermischer mit wenigstens einer Mischkammer (4) und einem vorgeschalteten Führungsbauteil (1) für die getrennte Zuführung von zu mischenden oder zu dispergierenden Fluiden (a) und (b), welches mit schräg zu der Mikrovermischerlängsachse verlaufenden schlitzförmigen Kanälen (5a) und (5b) durchzogen ist und bei dem sich die Kanäle (5a) und (5b) berührungslos im Wechsel kreuzen und in eine Mischkammer (4) einmünden, dort einen gemeinsamen Austrittsquerschnitt bilden und an der Austrittsseite (3a, b) eine Steghöhe zwischen benachbarten Austrittskanälen kleiner 500 μm, bevorzugt kleiner 150 μm, aufweisen, **dadurch gekennzeichnet, daß** sich die Kanäle (5a) und (5b) im Führungsbauteil (1) für mindestens ein Teil der zu vermischenden Stoffströme (a) und (b) im Querschnitt in Richtung der Kanaleintrittsseiten (2a) und (2b) bis einschließlich dieser kontinuierlich im Querschnitt vergrößern und sich an den Kanaleintrittseiten (2a) und (2b) nicht wieder verkleinern.

2. Mikrovermischer nach Anspruch 1, **dadurch gekennzeichnet, daß** die schlitzförmigen Kanäle (5a) bzw. (5b) über die ganze oder ein Teil der Länge mit in Strömungsrichtung ausgerichteten Stegen (6) versehen sind.

3. Mikrovermischer nach Anspruch 1, **dadurch gekennzeichnet, daß** in Strömungsrichtung gesehen hinter der Austrittsöffnung (3a) bzw. (3b) des Führungsbauteiles (1) ein Gitter (13), Netz oder ein gleichwirkenden, die Strömung unterteilenden Gebilde ausgestattet ist.

4. Mikrovermischer nach den Ansprüchen 1 und 2, **dadurch gekennzeichnet, daß** die Kanäle (5a) und (5b) des Führungsbauteiles (1) jeweils einzeln durch Drahterosion in einen elektrisch leitfähigen Grundkörper eingearbeitet sind, wobei die Kanäle jeweils eines Stoffstromes alternativ im Führungsbauteil durch einen ununterbrochenen Schnitt nach Art eines Kammschnittes in den Grundkörper eingearbeitet sind und die Kanäle verbindenden Hilfsschnitte (10a) und (10b) an den Kanaleintrittsseiten (2a) und (2b) sowie auf den Kanalaustrittsseiten (3a) und (3b) mit jeweils einer Platte (11) bzw. (12) abgedeckt sind.

5. Mikrovermischer nach den Ansprüchen 1 und 2, **dadurch gekennzeichnet, daß** das Führungsbauteil (1) durch schichtweises Laserschmelzen von Metallpulver hergestellt ist, wobei die Kanalbereiche (5a) und (5b) nicht aufgeschmolzen und durch nachträgliches Entfernen des nicht geschmolzenen Pulvers gebildet sind.

6. Mikrovermischer nach den Ansprüchen 1 und 2, **dadurch gekennzeichnet, daß** das Führungsbauteil (1) aus Kunststoff durch schichtweises Erhärten eines Kunststoffes mittels eines Laserstereolithographieverfahrens (Rapid Prototyping) hergestellt ist, wobei die Kanalbereiche (5a) und (5b) nicht belichtet und damit nicht gehärtet und durch nachträgliches Entfernen des nicht belichteten und nicht gehärteten Kunststoffes gebildet sind.

7. Mikrovermischer nach den Ansprüchen 1 und 2, **dadurch gekennzeichnet, daß** das Führungsbauteil (1) durch schichtweises Lasersintern von Keramikpulver hergestellt ist, wobei die Kanalbereiche (5a) und (5b) nicht gesintert und durch nachträgliches Entfernen des nicht gesinterten Keramikpulvers gebildet sind.

**Claims**

1. Static micromixer with at least one mixing chamber (4) and an upstream guiding unit (1) for separated supply of fluids to be mixed or to be dispersed (a) and (b) with this guiding unit being passed by slot-like channels (5a) and (5b) that run at an angle to the longitudinal axis of the micromixer and these channels (5a) and (5b) crossing each other alternately in a contact-free manner and leading into a mixing chamber (4) where they form a joint outlet cross-section with the web height between adjacent outlet channels on the outlet side (3a, b) being smaller than 500 μm and preferably smaller than 150 μm, **characterized by** the channels (5a) and (5b) in the guiding unit (1) for at least part of the fluid flows to be mixed (a) and (b) having a cross-section that increases continuously towards the channel inlet sides (2a) and (2b) and this cross-section not being reduced again on the channel inlet sides (2a) and (2b).

2. Micromixer according to Claim 1, **characterized by** the slot-like channels (5a) or (5b), over the entire or part of their length, being provided with webs (6) that are oriented in flow direction.

3. Micromixer according to Claim 1, **characterized by** a grid (13), a mesh or a flow divertor having the same effect being installed downstream of the outlet opening (3a) or (3b) of the guiding unit (1).

4. Micromixer according to Claims 1 and 2, **characterized by** the channels (5a) and (5b) of the guiding unit (1) being separately machined into an electrically conductive basic body by means of wire erosion with the channels of one fluid flow in the guiding unit being alternatively cut into the basic body by a continuous comb-like cut and the auxiliary cuts (10a) and (10b) connecting the channels being covered by a plate (11) and (12) each on the channel inlet sides (2a) and (2b) and the channel outlet sides (3a) and (3b).

5. Micromixer according to Claims 1 and 2, **characterized by** the guiding unit (1) being produced by layer-wise laser melting of metal powder with the channel areas (5a) and (5b) not being molten and formed by the later removal of the non-molten powder.

6. Micromixer according to Claims 1 and 2, **characterized by** the guiding unit (1) being produced from plastic by layer-wise hardening of the plastic using a laser stereolithography process (rapid prototyping) and the channel areas (5a) and (5b) not being exposed and, hence, not hardened and them being formed by the later removal of the non-exposed and non-hardened plastic.

7. Micromixer according to Claims 1 and 2, **characterized by** the guiding unit (1) being produced by layer-wise laser sintering of ceramic powder and the channel areas (5a) and (5b) not being sintered and formed by the later removal of the non-sintered ceramic powder.

## Revendications

1. Micro-mélangeur statique équipé d'une chambre de mélange (4) au moins, ainsi que d'un élément de guidage (1) placé en tête, pour l'amenée séparée de fluides à mélanger ou à disperser (a) et (b), qui est traversé par des canaux en forme de fentes (a) et (b) inclinés par rapport à l'axe longitudinal du micro-mélangeur et dans lequel les canaux (a) et (b) se croisent à tour de rôle sans contact et aboutissent dans une chambre de mélange (4) où ils forment une section de sortie commune, en présentant côté sortie, entre les canaux de sortie voisins, une hauteur de nervure inférieure à 500 μm, de préférence inférieure à 150 μm, **caractérisé en ce que** pour au moins une partie des fluides à mélanger (a) et (b), les canaux (5a) et (5b) dans l'élément de guidage (1) ont une section qui s'agrandit en continu jusqu'aux côtés d'entrée des canaux (2a) et (2b) y compris les côtés d'entrée et qui ne se réduit plus aux côtés d'entrée des canaux (2a) et (2b).

2. Micro-mélangeur selon la revendication 1, **caractérisé en ce que** les canaux en forme de fentes (5a) et respectivement (5b) sont munis de nervures (6) orientées selon le sens de l'écoulement sur toute ou partie de la longueur.

3. Micro-mélangeur selon la revendication 1, **caractérisé en ce que**, vu dans la direction de l'écoulement, derrière l'ouverture de sortie (3a) et respectivement (3b) de l'élément de guidage (1), est disposé une grille (13), un réseau ou un dispositif équivalent, répartissant l'écoulement.

4. Micro-mélangeur selon les revendications 1 et 2, **caractérisé en ce que** les canaux (5a) et (5b) de l'élément de guidage (1) sont incorporés individuellement, par étincelage par fil, dans un corps de base conductible électriquement, où les canaux de chaque fluide sont incorporés alternativement dans l'élément de guidage, par une coupe ininterrompue à la manière d'une coupe à peigne et où chacune des coupes auxiliaires liant les canaux (10a) et (10b) est couverte côté entrée des canaux (2a) et (2b) et côté sortie des canaux (3a) et (3b) par une plaque (11) ou respectivement (12).

5. , Micro-mélangeur selon les revendications 1 et 2, **caractérisé en ce que** l'élément de guidage (1) est fabriqué par fusion au laser par couches de poudre métallique, les tronçons des canaux (5a) et (5b) n'étant pas fondés, mais formés par enlèvement ultérieur de la poudre non fondue.

6. Micro-mélangeur selon les revendications 1 et 2, **caractérisé en ce que** l'élément de guidage (1) est fabriqué en matière plastique, par durcissement par couches d'une matière plastique à l'aide d'un procédé de stéréolithographie au laser (Rapid Prototyping), les tronçons de canal (5a) et (5b) n'étant pas exposés et donc pas durcis, mais formés pas enlèvement ultérieur de la matière plastique non exposée et non durcie.

7. Micro-mélangeur selon les revendications 1 et 2, **caractérisé en ce que** l'élément de guidage (1) est fabriqué par frittage au laser par couches de poudres céramiques, les tronçons de canal (5a) et (5b) n'étant pas frittés, mais formés par enlèvement ultérieur de la poudre céramique non frittée.

Fig. 1

Fig. 2a

Fig. 2b

## Fig. 3

EP 1 187 671 B1

Fig. 4

Fig. 5

Fig. 6